(19) Europäisches Patentamt
European Patent Office
Office européen des brevets

(11) **EP 2 709 068 A1**

(12) **EUROPEAN PATENT APPLICATION**

(43) Date of publication:
**19.03.2014 Bulletin 2014/12**

(51) Int Cl.:
**G06T 15/04** (2011.01)          **G06T 11/00** (2006.01)
**G06T 15/00** (2011.01)          **G06T 17/20** (2006.01)
**G06T 17/30** (2006.01)

(21) Application number: **13182948.3**

(22) Date of filing: **04.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.09.2012 JP 2012200168**

(71) Applicant: **Fujitsu Semiconductor Limited**
**Kohoku-ku, Yokohama-shi**
**Kanagawa 222-0033 (JP)**

(72) Inventor: **Kawahara, Akihiro**
**Kanagawa, 222-0033 (JP)**

(74) Representative: **HOFFMANN EITLE**
**Patent- und Rechtsanwälte**
**Arabellastrasse 4**
**81925 München (DE)**

(54) **Image processing apparatus**

(57)     An image processing apparatus has a texture mapping unit configured to obtain pixel data including first and second texture coordinates, and generate texel data corresponding to the first and second texture coordinates within a textured image having a gradation pattern based on a non-linear surface. A function of the non-linear surface is defined by a product of first and Bezier curve functions. The texture mapping unit includes first/ second Bezier curve function calculation unit configured to calculate the first/second Bezier curve function by obtaining the first/second texture coordinate and control values of the first/second Bezier curve function; a multiplier configured to multiply respective outputs of the first and second Bezier curve function calculation units; and a blending processing unit configured to generate the texel data by blending a plurality of color data corresponding to the gradation pattern using a multiplication value of the multiplier as a blending ratio.

FIG. 5

EP 2 709 068 A1

**Description**

FIELD

The present invention relates to an image processing apparatus.

BACKGROUND

In three-dimensional computer graphics, an image processing apparatus processes vertex data of a polygon serving as a rendering subject, and also processes image data of pixels in the polygon. Various types of image processing are performed to generate the image data of the pixels in the polygon, one of which is texture mapping processing.

Texture mapping processing is processing for adhering texture data (texel color data) stored in advance in a memory to each pixel of the polygon. The vertex data of the polygon typically include coordinate data (texture coordinate data) indicating coordinates in a texture memory that stores the texture data to be adhered to the polygon. Texel data in the texture memory are read on the basis of texture coordinates corresponding to a pixel in the polygon, and used to generate color data for the pixel.

A textured image having a gradation pattern is often used as a textured image. For example, data of a textured image having a gradation pattern are generated by blending two colors at a gradually varying blending ratio. With a linear gradation, the pattern is simple and therefore a high degree of expressiveness is not obtained. Hence, a textured image having a non-linear gradation pattern is often used as a more richly expressive gradation pattern.

Japanese Patent Application Publication No. 2010-165058, Japanese Patent Application Publication No. 2008-148165, and so on, for example, describe gradation patterns.

SUMMARY

The data of a textured image having a non-linear gradation pattern are data on a non-linear curve, and since calculation processing for calculating a non-linear curve is difficult, texture data determined in advance by calculation are stored in the texture memory. Corresponding texture data (texel color data) are then read from the texture memory on the basis of the texture coordinates of the pixel in the rendering subject polygon and used as the color data of the texel corresponding to the pixel.

However, a capacity of a high-speed internal memory that can be used for image processing is preferably as small as possible. It is therefore undesirable to store a large volume of texture data in an internal memory due to the limited memory capacity.

Use of the capacity of the internal memory may be avoided by providing an arithmetic circuit that generates the texture data of the pixel. However, the texture data of a non-linear gradation pattern are obtained by calculating two-dimensional data, and therefore the arithmetic circuit increases in scale, which is undesirable in terms of integration.

An object of the present invention is therefore to provide an image processing apparatus that generates texture data of a non-linear gradation pattern using a small-scale circuit.

According to a first aspect of the embodiment, an image processing apparatus configured to perform image processing on a polygon, has: a texture mapping unit configured to obtain pixel data including first and second texture coordinates, and generate texel data corresponding to the first and second texture coordinates within a textured image having a gradation pattern based on a non-linear surface, wherein a function of the non-linear surface is defined by a product of a first Bezier curve function and a second Bezier curve function, and the texture mapping unit has: a first Bezier curve function calculation unit configured to calculate the first Bezier curve function by obtaining the first texture coordinate and control values of the first Bezier curve function; a second Bezier curve function calculation unit configured to calculate the second Bezier curve function by obtaining the second texture coordinate and control values of the second Bezier curve function; a multiplier configured to multiply respective outputs of the first and second Bezier curve function calculation units; and a blending processing unit configured to generate the texel data by blending a plurality of color data corresponding to the gradation pattern using a multiplication value of the multiplier as a blending ratio.

According to the first aspect, there is no need to store the texture data in an internal memory, and moreover, a circuit scale of the image processing apparatus is reduced.

BRIEF DESCRIPTION OF DRAWINGS

FIG. 1 is a view illustrating a relationship between a textured image having a non-linear gradation pattern and a polygon.

FIG. 2 is a view illustrating a configuration of a display system according to this embodiment.

FIG. 3 is a view illustrating a configuration of the image processing apparatus 16 according to this embodiment.

FIG. 4 is a view illustrating the rasterization processing.

FIG. 5 is a view illustrating a configuration of the texture mapping unit 167.

FIG. 6 is a view showing a configuration of the texture generation circuit 41 according to this embodiment.

FIG. 7 is a view illustrating a configuration of the first Bezier curve function unit 51 of FIG. 6.

FIG. 8 is a view illustrating a configuration of the second Bezier curve function unit 53 of FIG. 6.

FIG. 9 is a view illustrating an arithmetic expression used by the blending processing unit 56 of FIG. 6.

## DESCRIPTION OF EMBODIMENTS

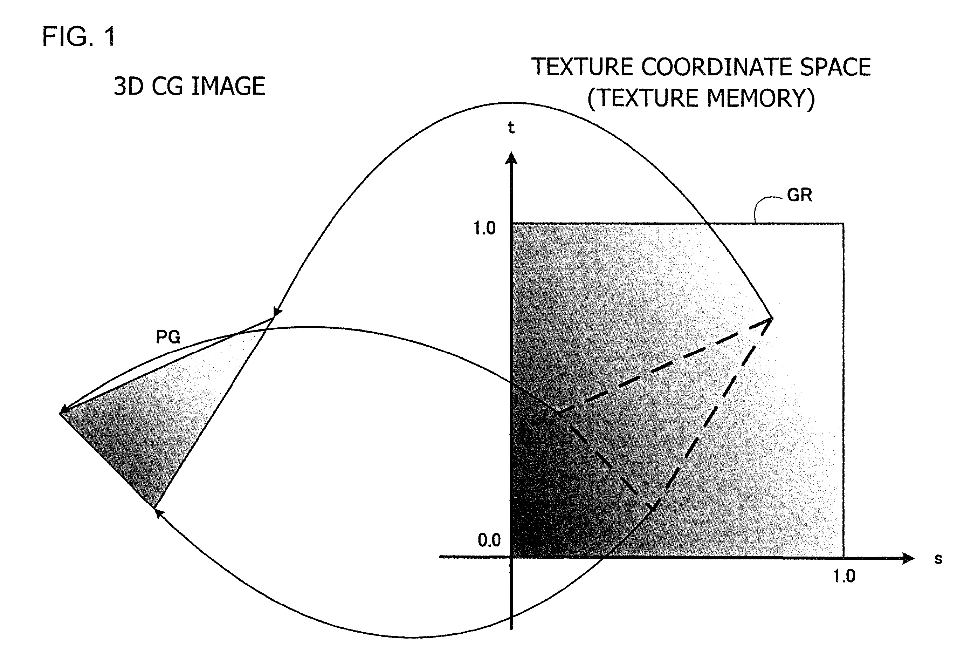

FIG. 1 is a view illustrating a relationship between a textured image having a non-linear gradation pattern and a polygon. Data of a non-linear gradation pattern GR are constituted by non-linear color data, or basic data for generating the color data within a two-dimensional range having coordinates s = 0.0 to 1.0, t = 0.0 to 1.0. Non-linear color data within a two-dimensional range are typically stored in an internal memory in advance, whereupon a gradation pattern within a triangular range specified by texture coordinates (s, t) of three vertices of a rendering subject polygon PG is mapped onto the polygon PG.

As illustrated in FIG. 1, the color data of the non-linear gradation pattern GR stored in the internal memory are constituted by a total of thirty-two bits (four bytes) of data, wherein each texel (corresponding to each pixel of the textured image) includes eight bits of data for each of RGB, for example, and eight bits of control data. When $512 \times 512$ texels exist within the two-dimensional range, a massive amount of data, i.e. $512 \times 512 \times 4$ bytes, is stored in the internal memory.

The non-linear gradation pattern GR illustrated in FIG. 1 is obtained by performing blending processing on two colors at a non-linear blending ratio. For example, when first color data color_0 and second color data color_1 are subjected to blending processing at a blending ratio br (br = 0.0 to 1.0), color data texel_color of the gradation pattern GR are determined from a following arithmetic expression.

$$\text{texel\_color} = (1.0\text{-br})^*\text{color\_0} + \text{br}^*\text{color\_1}$$

When the blending ratio br takes a value on a non-linear curve, the color data of the gradation pattern GR also take a value on a non-linear curve.

A non-linear gradation pattern can be defined by a Bezier surface, for example. As will be described below, a Bezier surface can be defined by a Bezier surface function on the basis of values of two-dimensional control points (control values hereafter). It is known that a desired non-linear curve can be defined in accordance with a Bezier surface function by defining the two-dimensional control values as desired.

However, processing for calculating a function of a Bezier surface involves large numbers of integrations and additions/subtractions. Therefore, when an arithmetic circuit is provided to calculate the Bezier surface function and the texture data are determined by calculation on the basis of the texture coordinates of the processing subject pixel, the arithmetic circuit increases in scale, and as a result, reducing the capacity of the internal memory becomes meaningless.

As a result of committed research undertaken by the present inventors, however, it has been found that data of a two-dimensional non-linear gradation pattern is generated by multiplying respective outputs of a first Bezier curve function having a first texture coordinate s as a variable and a second Bezier curve function having a second texture coordinate t as a variable, and that the scale of an arithmetic circuit for this purpose is considerably smaller than the scale of an arithmetic circuit for calculating a Bezier surface function.

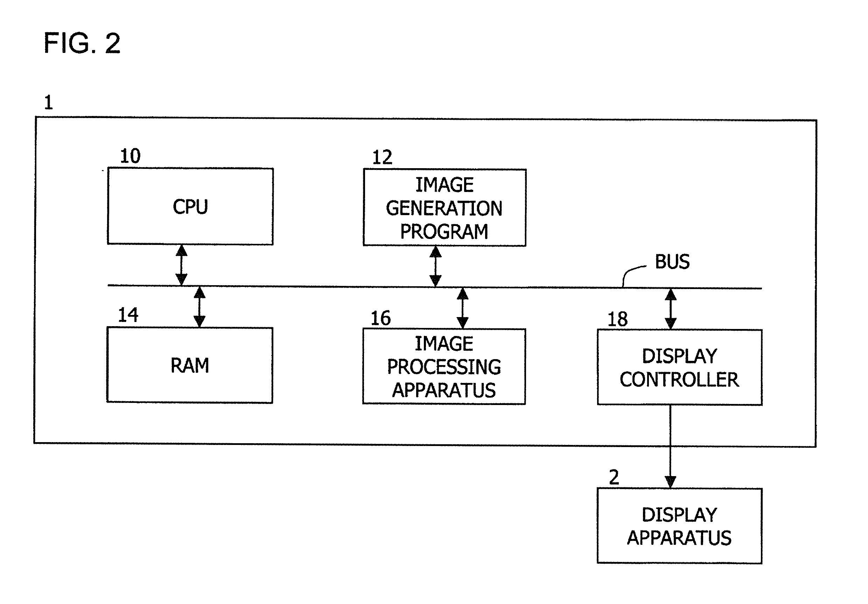

FIG. 2 is a view illustrating a configuration of a display system according to this embodiment. The display system includes a display image generation apparatus 1 that generates a display image, and a display apparatus 2 that displays the generated display image.

The display image generation apparatus 1 includes a CPU 10, an internal memory 14, and an internal bus BUS that connects these components. The display image generation apparatus 1 also includes a program memory storing an image generation program 12, and the image generation program 12 is executed by the CPU 10. By having the CPU 10 execute the image generation program 12, polygon data constituting a 3D image to be displayed in each frame are generated. The image generation program 12 specifies the polygon data respectively, and issues a command to render the polygon data.

The image processing apparatus 16 is a hardware circuit that generates a frame image to be displayed by processing the polygon data corresponding to the rendering command and stores the generated frame image in the internal memory 14. The 3D image is constituted by a large amount of polygon data, and the image processing apparatus 16 processes the large amount of polygon data at high speed in order to write color data of pixels included in the respective polygons to a frame memory area of the internal memory 14.

When the writing processing is completed on the color data of all of the polygons within a single frame, the color data in the frame memory area are read and output to the display apparatus 2 by a display controller 18. As a result, the display apparatus 2 displays a corresponding frame image.

The image processing apparatus according to this embodiment corresponds to the image processing apparatus 16 in the display image generation apparatus 1 shown in FIG. 2.

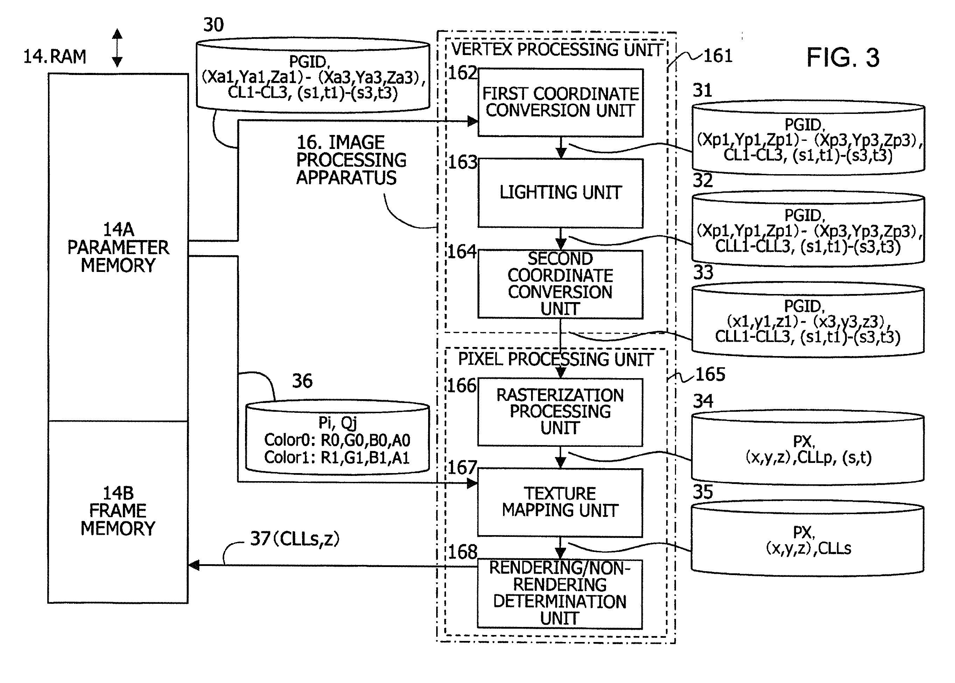

FIG. 3 is a view illustrating a configuration of the image processing apparatus 16 according to this embodiment. FIG. 3 depicts, in addition to the internal memory 14 and the image processing apparatus 16, data 30, 36 supplied to the image processing apparatus 16 and internal data 31 to 35 generated by image processing.

The internal memory 14 includes a parameter memory 14A that stores various parameter data generated by executing the image generation program 12 illustrated in FIG. 2, and a frame memory 14B to which the polygon color data generated by the image processing apparatus 16 are written.

When the image generation program 12 is executed by the CPU, polygon data 30 to be rendered and a texture parameter 36 for generating data of a textured image having a non-linear gradation pattern are stored in the parameter memory 14A. When the image generation program 12 issues the polygon rendering command by specifying the polygon data 30 and the texture parameter 36, the image processing apparatus 16 performs following image processing in response thereto, whereby color data are generated for each pixel in the polygon and written to the frame memory 14B.

The image processing apparatus 16 includes a vertex processing unit 161 that processes data relating to the vertices of the polygon, and a pixel processing unit 165 that processes data relating to the pixels in the polygon. The content of the processing executed by the vertex processing unit 161 and the pixel processing unit 165 will be described below together with the internal data 30 to 37 of the polygon.

First, the rendering subject polygon data 30 and the parameter 36 of the textured image having a non-linear gradation pattern are specified by the polygon rendering command. The polygon data 30 and the texture parameter 36 are generated by the image generation program of FIG. 2.

Next, a first coordinate conversion unit 162 of the vertex processing unit 161 reads the rendering subject polygon data 30 from the parameter memory 14A.

The polygon data 30 include following data, for example.

Polygon identification number: PGID

Coordinates of the three vertices within an absolute space: $(X_{a1}, Y_{a1}, Z_{a1})$ $(X_{a2}, Y_{a2}, Z_{a2})$ $(X_{a3}, Y_{a3}, Z_{a3})$

Color data of the three vertices: CL1, CL2, CL3

Texture coordinates corresponding to the three vertices: $(s_1, t_1)$ $(s_2, t_2)$ $(s_3, t_3)$

The first coordinate conversion unit 162 converts the coordinates of the three vertices within an absolute space into coordinate values of a coordinate system having a viewpoint as an origin on the basis of viewpoint coordinates specified by the rendering command. As a result, the first coordinate conversion unit 162 outputs following polygon data 31.

Polygon identification number: PGID

Coordinates of the three vertices within a space having the viewpoint as the origin: $(X_{p1}, Y_{p1}, Z_{p1})$ $(X_{p2}, Y_{p2}, Z_{p2})$ $(X_{p3}, Y_{p3}, Z_{p3})$

Color data of the three vertices: CL1, CL2, CL3

Texture coordinates corresponding to the three vertices: $(s_1, t_1)$ $(s_2, t_2)$ $(s_3, t_3)$

Next, a lighting unit 163 performs shading processing on the color data CL1, CL2, CL3 of the vertices on the basis of a light source so as to generate light source-processed color data CLL1, CLL2, CLL3. More specifically, the lighting unit 163 determines a color to be displayed at each vertex by performing shading processing on the color data of each vertex on the basis of vertex information including the coordinates $(X_{p1}, Y_{p1}, Z_{p1})$ to $(X_{p3}, Y_{p3}, Z_{p3})$ of the three vertices of the rendering subject polygon and a normal vector relative to the light source, light source information including coordinates of the light source and an orientation of the light source, and viewpoint information including the viewpoint coordinates and an orientation of the viewpoint. A generally known method is employed as a calculation method used in the shading processing performed in relation to the light source. As a result, the lighting unit 163 outputs following polygon data 32.

Polygon identification number: PGID

Coordinates of the three vertices within the space having the viewpoint as the origin: $(X_{p1}, Y_{p1}, Z_{p1})$ $(X_{p2}, Y_{p2}, Z_{p2})$ $(X_{p3}, Y_{p3}, Z_{p3})$

Color data of the three vertices: CLL1, CLL2, CLL3

Texture coordinates corresponding to the three vertices: $(s_1, t_1)$ $(s_2, t_2)$ $(s_3, t_3)$

Next, a second coordinate conversion unit 164 converts the vertex coordinates of the polygon in the above polygon data 32 into coordinates in a coordinate system of a screen set within the space having the viewpoint as the origin. The coordinate system of the screen is constituted by two-dimensional coordinates x, y on the screen and a screen depth z. As a result, the second coordinate conversion unit 164 outputs following polygon data 33.

Polygon identification number: PGID
Screen coordinates of the three vertices: (x1, y1, z1) (x2, y2, z2) (x3, y3, z3)
Color data of the three vertices: CLL1, CLL2, CLL3
Texture coordinates corresponding to the three vertices: (s1, t1) (s2, t2) (s3, t3)

Next, various processing executed by the pixel processing unit 165 will be described. First, a rasterization processing unit 166 calculates the data of the pixels in the rendering subject polygon in rasterization order and outputs the calculated data.

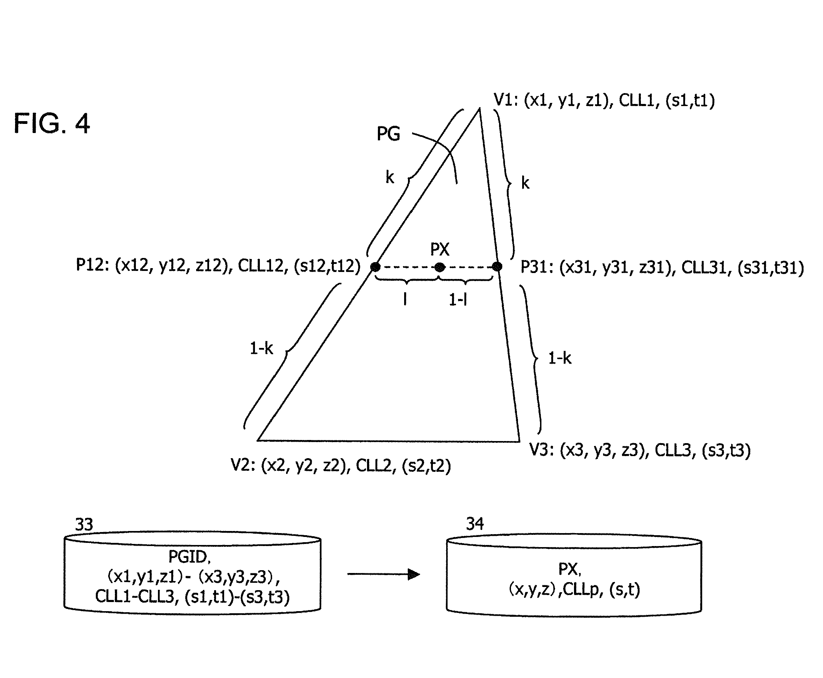

FIG. 4 is a view illustrating the rasterization processing. The polygon data 33 described above serve as the respective data of three vertices V1, V2, V3 of the polygon PG to be rendered. Hence, in the rasterization processing, data of a pixel PX in the polygon are determined from the data of the three vertices by a linear interpolation calculation. For example, the screen coordinates (x, y), the color data CLL, and the texture coordinates (s, t) of a pixel P12 existing between the vertices V1, V2 are determined by a calculation in which the data of the vertices V1, V2 are interpolated at an interpolation ratio k : 1.0 - k. Further, the screen coordinates, color data, and texture coordinates of a pixel P31 existing between the vertices V3, V1 are determined by a calculation in which the data of the vertices V3, V1 are interpolated at an interpolation ratio k : 1.0 - k.

The screen coordinates, color data, and texture coordinates of the pixel PX existing between the two pixels P12, P31 are then determined by performing a calculation in which the data of the two pixels P12, P31 are interpolated at an interpolation ratio l : 1.0 - l. As a result, the rasterization processing unit 166 outputs pixel data 34 of the polygon PG in rasterization order. The output pixel data 34 are as follows.

Screen coordinates: (x, y, z)
Color data: CLLp
Texture coordinates: (s, t)

Next, a texture mapping unit 167 obtains the pixel data 34 and calculates texel color data on the basis of the texture coordinates (s, t) of the pixels included therein and the textured image parameter 36 specified by the polygon rendering command. The texture mapping unit 167 then generates color data to be written to the frame memory 14B by synthesizing the color data CLLp included in the pixel data 34 with the texel color data (the colors of the pattern).

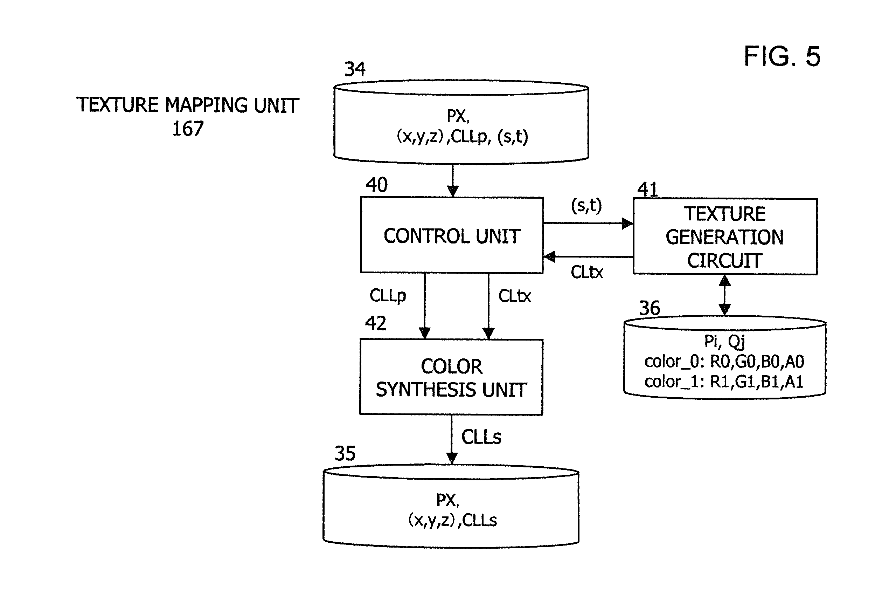

FIG. 5 is a view illustrating a configuration of the texture mapping unit 167. In the texture mapping unit 167, a control unit 40 outputs the texture coordinates (s, t) included in the input pixel data 34 and the parameter data 36 of the textured image, read from the parameter memory 14A, to a texture generation circuit 41. Information specifying the parameter data 36 of the textured image may be included in the data 30 to 33 of the rendering subject polygon or input into the control unit 40 of the texture mapping unit 167 using another method.

The texture generation circuit 41 according to this embodiment will now be described. First, the data of the textured image having a non-linear gradation pattern according to this embodiment will be described.

The non-linear gradation pattern GR illustrated in FIG. 1 is ideally defined by a Bezier surface. An arithmetic expression for calculating a Bezier surface is as follows.

$$BesierSurface(s,t) = \sum_{i=0}^{n} \sum_{j=0}^{m} P_{ij} B_i^n(s) B_j^m(t) \qquad \text{(Expression 1)}$$

$$B_i^n(s) = \frac{n!}{i!(n-1)!} s^i (1-s)^{n-i} \qquad \text{(Expression 2)}$$

$$B_j^m(t) = \frac{m!}{j!(m-1)!} t^i (1-t)^{m-i} \qquad \text{(Expression 3)}$$

! represents a factorial, while $P_{ij}$ represents (n + 1) $\times$ (m + 1) two-dimensionally disposed control values.

Hence, by applying n + 1, m + 1, (n + 1) $\times$ (m + 1) control values $P_{ij}$ as parameters, the Bezier surface is defined as the height of a non-linear surface corresponding to the (n + 1) $\times$ (m + 1) two-dimensionally disposed control values $P_{ij}$. A calculated value of the Bezier surface is then associated with a blending coefficient such that colors obtained by performing blending processing on two colors using the blending coefficient are set as the color data of the textured image.

Ideally, the texture generation circuit 41 is constituted by an arithmetic circuit corresponding to the arithmetic expression for calculating the Bezier surface illustrated in Expression 1. In so doing, the texel color data is determined by calculation on the basis of the texture coordinates (s, t) of the pixel data, thereby eliminating the need for a texture memory.

However, the arithmetic expression for calculating the Bezier surface illustrated in Expression 1 is complicated, and the number of calculations therein is as follows.
Number of multiplications: (n + m + 2) (m + 1) (n + 1)
Number of additions/subtractions: n (n + 1) (m + 1) / 2 + m (n + 1) (m + 1)/2+nm

Note that this does not include the number of calculations needed to calculate n! / i! (n - 1)!, m! / j! (m - 1)! in Expressions 2 and 3.

To illustrate this point using a specific example, when n + 1 = 4 and m + 1 = 4 (i.e. when the number of controls values $P_{ij}$ is sixteen), Expression 1 takes the form of a following three-dimensional function.

$$
\begin{aligned}
BesierSurface(s,t) &= \sum_{i=0}^{3} \sum_{j=0}^{3} P_{ij} B_i^3(s) B_j^3(t) \\
&= P_{00}*1*(1-s)^3*1*(1-t)^3 + P_{01}*1*(1-s)^3*3*t*(1-t)^2 \\
&+ P_{02}*1*(1-s)^3*3*t^2*(1-t) + P_{03}*1*(1-s)^3*1*t^3 \\
&+ P_{10}*3*s*(1-s)^2*1*(1-t)^3 + P_{11}*3*s*(1-s)^2*3*t*(1-t)^2 \\
&+ P_{12}*3*s*(1-s)^2*3*t^2*(1-t) + P_{13}*3*s*(1-s)^2*1*t^3 \\
&+ P_{20}*3*s^2*(1-s)*1*(1-t)^3 + P_{21}*3*s^2*(1-s)*3*t*(1-t)^2 \\
&+ P_{22}*3*s^2*(1-s)*3*t^2*(1-t) + P_{23}*3*s^2*(1-s)*1*t^3 \\
&+ P_{30}*1*s^3*1*(1-t)^3 + P_{31}*1*s^3*3*t*(1-t)^2 \\
&+ P_{32}*1*s^3*3*t^2*(1-t) + P_{33}*1*s^3*1*t^3
\end{aligned}
$$
(Expression 4)

In the above case, the number of multiplications is 128 (eight multiplications for each of the four terms $P_{00}$ to $P_{03}$ (for a total of thirty-two multiplications), and likewise for $P_{10}$ to $P_{13}$, $P_{20}$ to $P_{23}$, $P_{30}$ to $P_{33}$ for a total of 128 multiplications), and the number of additions/subtractions is 64 (forty-eight subtractions for sixteen terms, and sixteen additions for sixteen terms). Likewise with a three-dimensional function, therefore, the scale of the arithmetic circuit increases.

Hence, in this embodiment, the non-linear gradation pattern GR illustrated in FIG. 1 is defined by a product of two Bezier curves. In other words, the non-linear gradation pattern GR is defined by a following arithmetic expression.

$$
BesierCurveS(s)*BesierCurveS(t) = \{\sum_{i=0}^{n} P_i B_i^n(s)\}\{\sum_{j=0}^{m} Q_j B_j^m(t)\} \quad \text{(Expression 5)}
$$

$$
BesierCurveS(s) = \sum_{i=0}^{n} P_i B_i^n(s)\} \quad \text{(Expression 6)}
$$

$$BesierCurveT(t) = \sum_{j=0}^{m} Q_j B_j^m(t) \quad \text{(Expression 7)}$$

Expressions 6 and 7 illustrated above are functions of Bezier curves respectively having variables s, t and control values $P_i$, $Q_j$. In Expression 1, $(n + 1) \times (m + 1)$ control values $P_{ij}$ exist, whereas in Expression 5, $(n + 1)$ control values $P_i$ and $(m + 1)$ control values $Q_j$ exist. Expression 5 is obtained by multiplying first and second Bezier curves illustrated respectively in Expressions 6 and 7.

A surface having a coordinate plane (s, t) defined in Expression 5 will be made similar or identical to the ideal Bezier surface illustrated in Expression 1. In other words, Expression 1 and Expression 5 have a following relationship.

$$\begin{aligned}
BesierSurface(s,t) &= \sum_{i=0}^{n} \sum_{j=0}^{m} P_{ij} B_i^n(s) B_j^m(t) \\
&= \sum_{i=0}^{n} \{ P_i B_i^n(s) \sum_{j=0}^{m} Q_j B_j^m(t) \} \\
&= \{ \sum_{i=0}^{n} P_i B_i^n(s) \} \{ \sum_{j=0}^{m} Q_j B_j^m(t) \} \\
&= BesierCurveS(s) \bullet BesierCurveT(t) \quad \text{(Expression 8)}
\end{aligned}$$

As is evident from Expression 8, when a product of the respective control values $P_i$, $Q_j$ of the two Bezier curves in Expression 5 is equal to the respective two-dimensional control values $P_{ij}$ of the Bezier surface in Expression 1 (i.e. when $P_{ij} = P_i \times Q_j$), the surface of Expression 5 is made identical to the Bezier surface of Expression 1. Note, however, that as long as the product of the respective control values $P_i$, $Q_j$ of the two Bezier curves in Expression 5 is similar to the respective two-dimensional control values $P_{ij}$ of the Bezier surface in Expression 1, the surface of Expression 5 is made similar to the Bezier surface of Expression 1.

Moreover, as illustrated by the surface of Expression 5, by defining the non-linear gradation pattern GR by the product of two Bezier curves, the number of calculations involved therein is as follows. This number is smaller than that of Expression 1.

Number of multiplications: $(n +1)^2 + (m + 1)^2 + 1$

Number of additions/subtractions: $n (n + 3) / 2 + m (m + 3) / 2$

Note that this does not include the number of calculations needed to calculate n! / i! (n - 1)!, m! / j! (m - 1)!.

To illustrate this point using a specific example, when n + 1 = 4 and m + 1 = 4 (i.e. when four controls values $P_i$ and four control values $Q_j$ exist), Expression 1 takes the form of a following three-dimensional function.

$$\begin{aligned}
BesierCurveS(s) * BesierCurveS(t) &= \{ \sum_{i=0}^{3} P_i B_i^3(s) \} \{ \sum_{j=0}^{3} Q_j B_j^3(t) \} \\
&= \{ P_0 * 1 * (1-s)^3 + P_1 * 3 * s * (1-s)^2 + P_2 * 3 * s^2 * (1-s) + P_3 * 1 * s^3 \} * \\
&\quad \{ Q_0 * 1 * (1-t)^3 + Q_1 * 3 * t * (1-t)^2 + Q_2 * 3 * t^2 * (1-t) + Q_3 * 1 * t^3 \}
\end{aligned}$$

$$\text{(Expression 9)}$$

In the above case, the number of multiplications is thirty-three and the number of additions/subtractions is eighteen, and therefore the arithmetic circuit scale is smaller than the scale of the arithmetic circuit used to calculate the Bezier surface of Expression 4. In Expression 9, four multiplications are performed on respective terms in parentheses in a former half, while the numbers of subtractions are three, two, and one, and three additions are performed on four terms for a total of nine additions/subtractions. This applies likewise to terms in parentheses in a latter half. Further, a single multiplication is performed between the two terms in parentheses.

In this embodiment, the texture generation circuit 41 illustrated in FIG. 5 is constituted by an arithmetic circuit for performing the calculations of Expression 8. More preferably, the texture generation circuit 41 is constituted by an arithmetic circuit for performing the calculations of Expression 9.

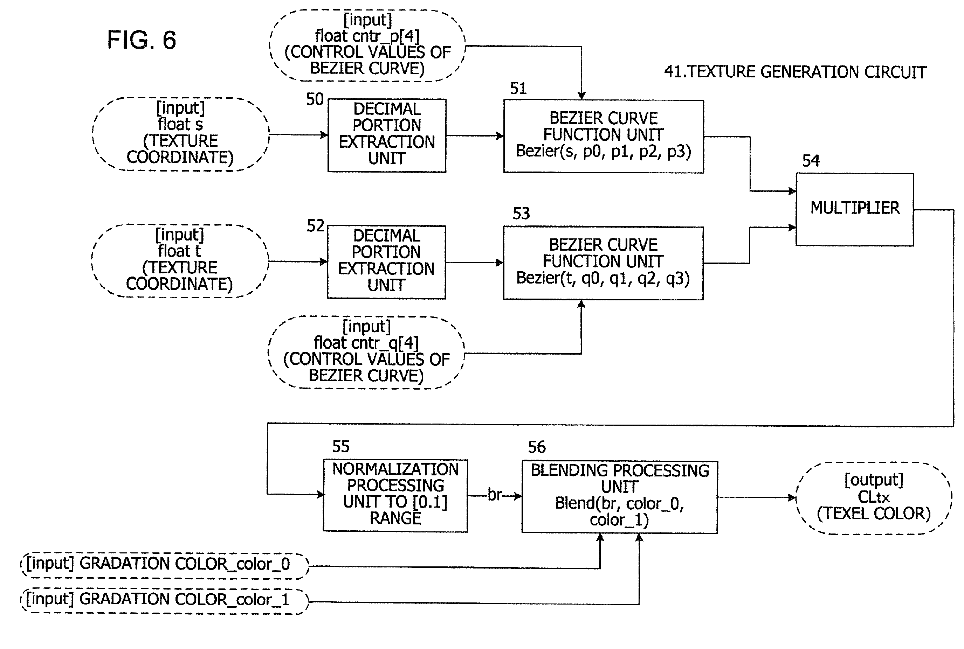

FIG. 6 is a view showing a configuration of the texture generation circuit 41 according to this embodiment. The texture generation circuit 41 illustrated in FIG. 6 includes a decimal portion extraction unit 50 corresponding to the texture coordinate s, a Bezier curve function unit 51 corresponding to Expression 6, a decimal portion extraction unit 52 corresponding to the texture coordinate t, a Bezier curve function unit 53 corresponding to Expression 7, and a multiplier 54 that multiples respective outputs of the two Bezier curve function units. Expression 5, or Expression 9 when n = m = 3, is calculated using the circuit configuration described above.

In the drawing, the texture coordinates s, t and control values p [4], q [4] of the Bezier curves are constituted by floating point data, indicated in the drawing by "float". The decimal portion extraction units 50, 52 are circuits for extracting decimal point parts of the texture coordinates s, t. As illustrated in FIG. 1, the texture coordinates s, t respectively take values between 0.0 and 1.0, and therefore the decimal point parts serve as effective data.

Further, in FIG. 6, a normalization processing unit 55 performs normalization processing on an output of the multiplier 54 within a range of 0.0 to 1.0 in order to output the blending ratio br. By normalizing the blending ratio br within a range of 0.0 to 1.0, the normalized blending ratio is used as the blending ratio br at a subsequent stage by a blending processing unit 56. The blending processing unit 56 performs blending processing on the two colors color_0, color_1 constituting the gradation pattern on the basis of the blending ratio br, and outputs a texel color CLtx.

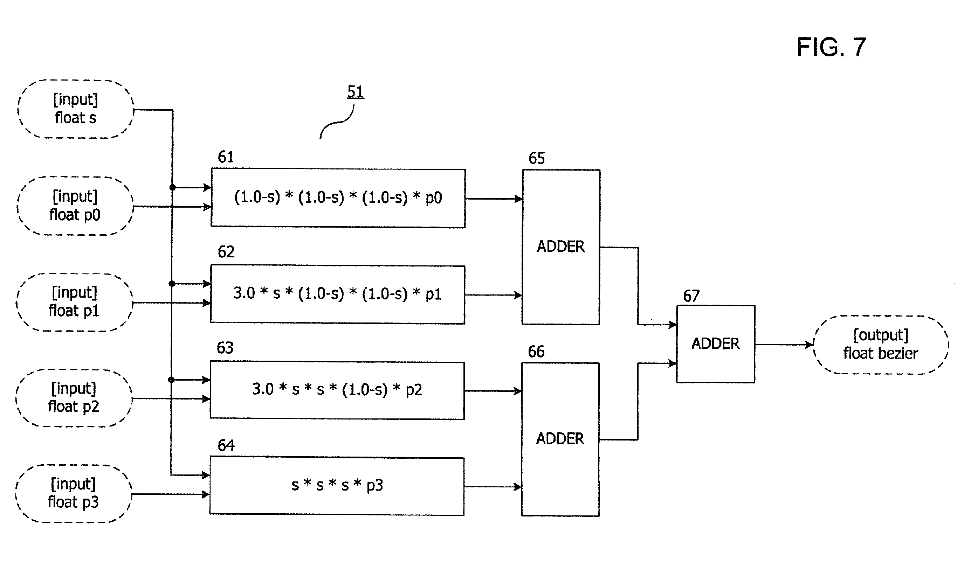

FIG. 7 is a view illustrating a configuration of the first Bezier curve function unit 51 of FIG. 6. The first Bezier curve function unit 51 is a circuit for performing the calculations in parentheses in the former half of Expression 9, and includes circuits 61, 62, 63, 64, which are provided in parallel to calculate the respective terms in parentheses in the former half of Expression 9. Texture coordinates s and control values p0 to p3 are input respectively into the circuits 61 to 64. The first Bezier curve function unit 51 further includes an adder 65 for adding together outputs of the circuits 61, 62, an adder 66 for adding together outputs of the circuits 63, 64, and an adder 67 for adding together outputs of the two adders 65, 66.

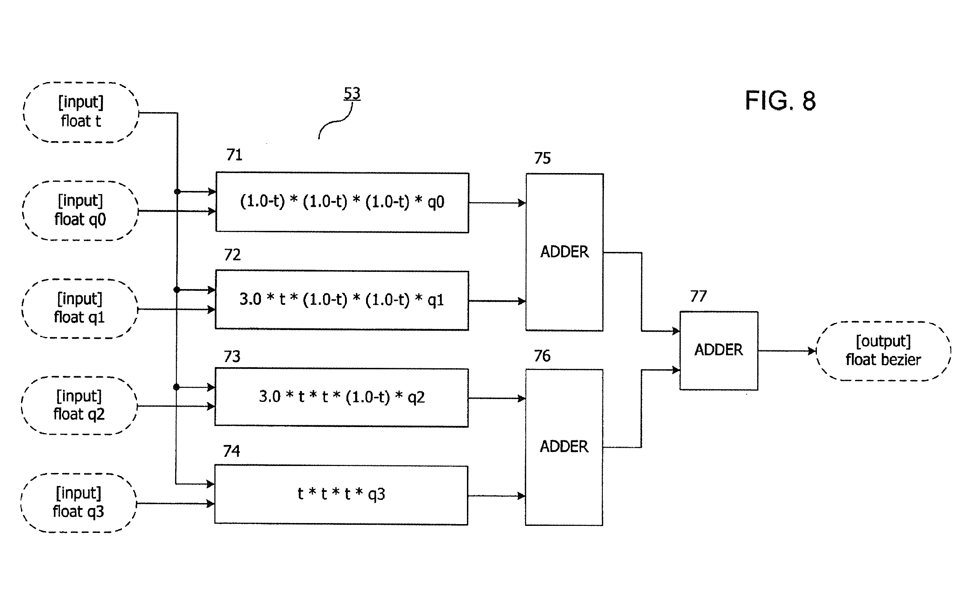

FIG. 8 is a view illustrating a configuration of the second Bezier curve function unit 53 of FIG. 6. The second Bezier curve function unit 53 is a circuit for performing the calculations in parentheses in the latter half of Expression 9, and includes circuits 71, 72, 73, 74, which are provided in parallel to calculate the respective terms in parentheses in the latter half of Expression 9. Texture coordinates s and control values q0 to q3 are input respectively into the circuits 71 to 74. The second Bezier curve function unit 53 further includes an adder 75 for adding together outputs of the circuits 71, 72, an adder 76 for adding together outputs of the circuits 73, 74, and an adder 77 for adding together outputs of the two adders 75, 76.

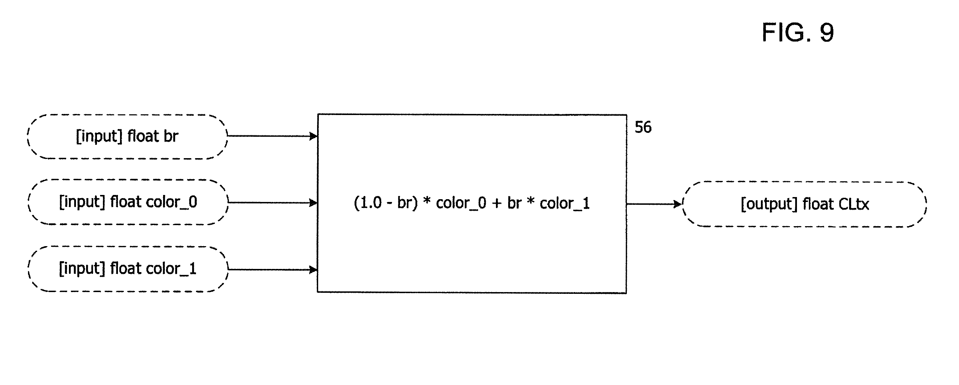

FIG. 9 is a view illustrating an arithmetic expression used by the blending processing unit 56 of FIG. 6. The blending processing unit 56 calculates the two colors color_0, color_1 serving as the parameters of the textured image having a gradation pattern on the basis of the blending ratio br generated by the arithmetic circuit described above using a following arithmetic expression, and then outputs the texel color data CLtx.

$$CLtx = (1.0 - br) * color\_0 + br * color\_1$$

Color data color_0, color_1 include data for three primary colors RGB, for example, and control data A, and are thus constituted by color_0 = R0, G0, B0, A0 and color_1 = R1, G1, B1, A1. Further, the calculations of Expression 10 are performed in relation to the respective color data, whereas the control data A are not subjected to blending processing calculations.

Returning to the texture mapping unit of FIG. 5, a color synthesis unit 42 synthesizes the pixel color data CLLp determined by interpolating the color data of the vertices of the polygon with the texel color data CLtx so as to output pixel color data CLLs. More specifically, blending processing is preferably performed on the pixel color data CLLp and the texel color data CLtx at a predetermined blending ratio. The blending processing includes similar calculations to those of Expression 10, described above.

Next, a rendering/non-rendering determination unit 168 of the image processing apparatus 16 illustrated in FIG. 3 determines whether or not to overwrite the color data CLLs of the processing subject pixel to the frame memory 14B on the basis of the in-screen coordinate values (x, y, z) of the pixel data 35 output by the texture mapping unit 167. More specifically, the rendering/non-rendering determination unit 168 compares the depth z, from the screen coordinates (x, y), of the pixel stored in the frame memory 14B with the depth z of the pixel currently undergoing processing, and when the depth z of the pixel undergoing processing is shallower, or in other words when the pixel of the polygon undergoing processing is further frontward in a depth direction (a z axis direction) of the screen than the pixel of the polygon stored in the frame memory 14B, the color data CLLs are overwritten to the frame memory 14B. When the pixel of the polygon undergoing processing is not further frontward, on the other hand, the color data CLLs are discarded without being written to the frame memory 14B.

When the color data CLLs of the processing subject pixel are overwritten to the frame memory 14B, the color data CLLs are recorded in the frame memory 14B having an identical pixel depth z or a separate memory such as a depth buffer, whereby the color data CLLs is used in a depth check performed on the color data of a subsequent pixel.

According to this embodiment, as described above, in texture mapping performed during image processing of a three-dimensional computer graphic, when a textured image having a non-linear gradation pattern is subjected to mapping processing, rather than mapping a textured image stored in advance in an internal memory, texel color data are generated by an arithmetic circuit during each processing operation. As a result, the capacity of the internal memory is reduced. Further, the textured image having a non-linear gradation pattern is defined by the product of two Bezier curves, and therefore the circuit scale of the arithmetic circuit is reduced.

**Claims**

1. An image processing apparatus that performs image processing on a polygon, comprising
   a texture mapping unit configured to obtain pixel data including first and second texture coordinates, and generate texel data corresponding to the first and second texture coordinates within a textured image having a gradation pattern based on a non-linear surface,
   wherein a function of the non-linear surface is defined by a product of a first Bezier curve function and a second Bezier curve function, and
   the texture mapping unit comprises:

   a first Bezier curve function calculation unit configured to calculate the first Bezier curve function by obtaining the first texture coordinate and control values of the first Bezier curve function;
   a second Bezier curve function calculation unit configured to calculate the second Bezier curve function by obtaining the second texture coordinate and control values of the second Bezier curve function;
   a multiplier configured to multiply respective outputs of the first and second Bezier curve function calculation units; and
   a blending processing unit configured to generate the texel data by blending a plurality of color data corresponding to the gradation pattern using a multiplication value of the multiplier as a blending ratio.

2. The image processing apparatus according to claim 1, wherein, when the first texture coordinate is set as s and the control values of the first Bezier curve are set as $P_i$ ($i = 0$ to n), the first Bezier curve function is as follows

$$BesierCurveS(s) = \sum_{i=0}^{n} P_i B_i^n(s)$$

when the second texture coordinate is set as t and the control values of the second Bezier curve are set as $Q_j$ ($j = 0$ to m), the second Bezier curve function is as follows

$$BesierCurveT(t) = \sum_{j=0}^{m} Q_j B_j^m(t)$$

where

$$B_i^n(s) = \frac{n!}{i!(n-1)!} s^i (1-s)^{n-i}$$

$$B_j^m(t) = \frac{m!}{j!(m-1)!} t^i (1-t)^{m-i}$$

and,

a function of the non-linear surface is

$$BesierCurveS(s) * BesierCurveT(t) = \{\sum_{i=0}^{n} P_i B_i^n(s)\}\{\sum_{j=0}^{m} Q_j B_j^m(t)\}$$

3. The image processing apparatus according to claim 2, wherein n and m correspond respectively to n = 3 and m = 3.

4. The image processing apparatus according to one of claims 1 to 3, wherein the texture mapping unit further comprises a color synthesis unit configured to synthesize the texel data with color data of the pixel data.

FIG. 1

3D CG IMAGE

TEXTURE COORDINATE SPACE
(TEXTURE MEMORY)

FIG. 2

## FIG. 3

14.RAM

**14A PARAMETER MEMORY**

**14B FRAME MEMORY**

16. IMAGE PROCESSING APPARATUS

30 — PGID, (Xa1,Ya1,Za1)- (Xa3,Ya3,Za3), CL1-CL3, (s1,t1)-(s3,t3)

161 — VERTEX PROCESSING UNIT
- 162 FIRST COORDINATE CONVERSION UNIT
- 163 LIGHTING UNIT
- 164 SECOND COORDINATE CONVERSION UNIT

165 — PIXEL PROCESSING UNIT
- 166 RASTERIZATION PROCESSING UNIT
- 167 TEXTURE MAPPING UNIT
- 168 RENDERING/NON-RENDERING DETERMINATION UNIT

31 — PGID, (Xp1,Yp1,Zp1)- (Xp3,Yp3,Zp3), CL1-CL3, (s1,t1)-(s3,t3)

32 — PGID, (Xp1,Yp1,Zp1)- (Xp3,Yp3,Zp3), CLL1-CLL3, (s1,t1)-(s3,t3)

33 — PGID, (x1,y1,z1)- (x3,y3,z3), CLL1-CLL3, (s1,t1)-(s3,t3)

34 — PX, (x,y,z),CLLp, (s,t)

35 — PX, (x,y,z),CLLs

36 — Pi, Qi  Color0: R0,G0,B0,A0  Color1: R1,G1,B1,A1

37 (CLLs,z)

13

# FIG. 4

V1: (x1, y1, z1), CLL1, (s1,t1)

PG

k

PX

P12: (x12, y12, z12), CLL12, (s12,t12)

P31: (x31, y31, z31), CLL31, (s31,t31)

l  1-l

1-k

k

1-k

V3: (x3, y3, z3), CLL3, (s3,t3)

V2: (x2, y2, z2), CLL2, (s2,t2)

33

PGID,
(x1,y1,z1)- (x3,y3,z3),
CLL1-CLL3, (s1,t1)-(s3,t3)

34

PX,
(x,y,z),CLLp, (s,t)

EP 2 709 068 A1

FIG. 5

EP 2 709 068 A1

# FIG. 6

41.TEXTURE GENERATION CIRCUIT

[input]
float cntr_p[4]
(CONTROL VALUES OF
BEZIER CURVE)

[input]
float s
(TEXTURE
COORDINATE)

50 DECIMAL
PORTION
EXTRACTION
UNIT

51 BEZIER CURVE
FUNCTION UNIT
Bezier(s, p0, p1, p2, p3)

[input]
float t
(TEXTURE
COORDINATE)

52 DECIMAL
PORTION
EXTRACTION
UNIT

53 BEZIER CURVE
FUNCTION UNIT
Bezier(t, q0, q1, q2, q3)

[input]
float cntr_q[4]
(CONTROL VALUES OF
BEZIER CURVE)

54 MULTIPLIER

55 NORMALIZATION
PROCESSING
UNIT TO [0.1]
RANGE

—br→

56 BLENDING PROCESSING
UNIT
Blend(br, color_0,
color_1)

[output]
CLtx
(TEXEL COLOR)

[input] GRADATION COLOR_color_0

[input] GRADATION COLOR_color_1

FIG. 7

51

61   (1.0-s) * (1.0-s) * (1.0-s) * p0

62   3.0 * s * (1.0-s) * (1.0-s) * p1

63   3.0 * s * s * (1.0-s) * p2

64   s * s * s * p3

65   ADDER

66   ADDER

67   ADDER

[input] float s

[input] float p0

[input] float p1

[input] float p2

[input] float p3

[output] float bezier

EP 2 709 068 A1

FIG. 8

[input]
float t

[input]
float q0

[input]
float q1

[input]
float q2

[input]
float q3

53

71
(1.0-t) * (1.0-t) * (1.0-t) * q0

72
3.0 * t * (1.0-t) * (1.0-t) * q1

73
3.0 * t * t * (1.0-t) * q2

74
t * t * t * q3

75
ADDER

76
ADDER

77
ADDER

[output]
float bezier

# FIG. 9

Europäisches
Patentamt

European
Patent Office

Office européen
des brevets

## EUROPEAN SEARCH REPORT

Application Number

EP 13 18 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 202 689 A1 (ST MICROELECTRONICS R&D LTD [GB]) 30 June 2010 (2010-06-30) <br> * paragraph [0004] - paragraph [0005] * <br> * paragraph [0007] - paragraph [0009] * <br> * paragraph [0012] - paragraph [0013] * <br> * paragraph [0026] - paragraph [0029] * <br> * paragraph [0035] - paragraph [0037] * <br> * paragraph [0042] - paragraph [0044] * <br> * figures 3,4,6 * | 1-4 | INV. <br> G06T15/04 <br> G06T11/00 <br> G06T15/00 <br><br> ADD. <br> G06T17/20 <br> G06T17/30 |
| Y | EP 0 949 591 A2 (ADOBE SYSTEMS INC [US]) 13 October 1999 (1999-10-13) <br> * paragraph [0006] - paragraph [0011] * <br> * paragraph [0034] - paragraph [0036] * <br> * paragraph [0043] - paragraph [0044] * <br> * figures 1,2,3 * | 1-4 | |
| A | TAMY BOUBEKEUR, CHRISTOPHE SCHLICK: "Generic Mesh Refinement on GPU", ACM, 2 PENN PLAZA, SUITE 701 - NEW YORK USA, 30 July 2005 (2005-07-30), - 31 July 2005 (2005-07-31), pages 99-120, XP040022634, Graphics Hardware 2005, 30-31 July 2005, Los Angeles CA <br> * page 101, left-hand column, line 1 - line 17 * <br> * Section 4. Examples; page 101, right-hand column, line 1 - page 102, left-hand column, paragraph 2 * <br> * page 102, right-hand column, line 4 - line 13 * <br> * Appendix A; page 104, left-hand column, line 1 - right-hand column, last line * <br> * figures 1,2,4 * | 1-4 | TECHNICAL FIELDS SEARCHED (IPC) <br><br> G06T |

-/--

The present search report has been drawn up for all claims

| Place of search | Date of completion of the search | Examiner |
|---|---|---|
| Berlin | 29 January 2014 | Gauthier, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 13 18 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LARRY SELLER: "Quadratic interpolation for near-Phong quality shading", ACM SIGGRAPH 98 CONFERENCE ABSTRACTS AND APPLICATIONS ON , SIGGRAPH '98, 1 January 1998 (1998-01-01), page 268, XP055092082, New York, New York, USA DOI: 10.1145/280953.282235 ISBN: 978-1-58-113046-1 * the whole document * | 1-4 | |
| A | US 5 951 713 A (LIGUORI VINCENZO [AU]) 14 September 1999 (1999-09-14) * figures 1,2,3,4,6 * * column 2, line 18 - column 3, line 51 * * column 5, line 55 - column 6, line 7 * | 1-4 | |
| A | MARIA BOSCHIROLI ET AL: "A comparison of local parametricBÃ CR zier interpolants for triangular meshes", COMPUTERS AND GRAPHICS, ELSEVIER, GB, vol. 35, no. 1, 15 September 2010 (2010-09-15), pages 20-34, XP028132913, ISSN: 0097-8493, DOI: 10.1016/J.CAG.2010.09.011 [retrieved on 2010-09-23] * Section 1. Introduction; page 20, left-hand column, line 1 - right-hand column, last line * * Section 2. Continous surface schemes; page 20, right-hand column, line 1 - page 22, right-hand column, last line * | 1-4 | TECHNICAL FIELDS SEARCHED (IPC) |

-/--

The present search report has been drawn up for all claims

| Place of search | Date of completion of the search | Examiner |
|---|---|---|
| Berlin | 29 January 2014 | Gauthier, J |

EPO FORM 1503 03.82 (P04C01)

Europäisches
Patentamt

European
Patent Office

Office européen
des brevets

## EUROPEAN SEARCH REPORT

Application Number

EP 13 18 2948

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/214506 A1 (KOSELJ METOD [DE] ET AL) 20 November 2003 (2003-11-20)<br>* figures 1,2,5,7,9,10,17 *<br>* paragraph [0002] - paragraph [0004] *<br>* paragraph [0008] *<br>* paragraph [0091] - paragraph [0094] *<br>* paragraph [0123] *<br>* paragraph [0137] - paragraph [0157] *<br>----- | 1-4 | |
| A | LÁSZLÓ SZIRMAY-KALOS ET AL: "Displacement mapping on the GPU state of the art", COMPUTER GRAPHICS FORUM, WILEY-BLACKWELL PUBLISHING LTD, GB,<br>vol. 27, no. 6,<br>1 September 2008 (2008-09-01), pages 1567-1590, XP002637303,<br>ISSN: 0167-7055, DOI:<br>10.1111/J.1467-8659.2007.01108.X<br>[retrieved on 2008-01-03]<br>* Section 3.1 Vertex modification...;<br>page 1572, left-hand column, line 1 - line 15 *<br>* Section 4. Per pixel displacement mapping on the GPU;<br>page 1572, right-hand column, line 1 - page 1573, right-hand column, last line *<br>* figures 2,5 *<br>----- | 1-4 | |
| A | US 6 388 671 B1 (YOSHIZAWA HIDEKI [JP] ET AL) 14 May 2002 (2002-05-14)<br>* figures 5,7,8,10,21,22,30, *<br>* column 15, line 31 - line 42 *<br>* column 16, line 54 - column 19, line 21 *<br>* column 24, line 33 - column 25, line 43 *<br>* column 29, line 21 - column 30, line 12 *<br>-----<br>-/-- | 1-4 | TECHNICAL FIELDS SEARCHED (IPC) |

The present search report has been drawn up for all claims

| Place of search | Date of completion of the search | Examiner |
|---|---|---|
| Berlin | 29 January 2014 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 18 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 207 585 A (SUN MICROSYSTEMS INC SUN MICROSYSTEMS INC [US]) 1 February 1989 (1989-02-01) * figure 2 * * page 2, last line - page 3, line 3 * * page 10, last line - page 11, line 14 * * page 12, line 12 - page 16, line 3 * * page 17, line 6 - page 19, line 29 * * page 25, line 2 - page 29, line 3 * ----- | 1-4 | |

TECHNICAL FIELDS
SEARCHED    (IPC)

The present search report has been drawn up for all claims

| Place of search | Date of completion of the search | Examiner |
|---|---|---|
| Berlin | 29 January 2014 | Gauthier, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 18 2948

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2014

| Patent document cited in search report | | | Publication date | Patent family member(s) | | | Publication date |
|---|---|---|---|---|---|---|---|
| EP | 2202689 | A1 | 30-06-2010 | EP | 2202689 | A1 | 30-06-2010 |
| | | | | US | 2010225660 | A1 | 09-09-2010 |
| EP | 0949591 | A2 | 13-10-1999 | EP | 0949591 | A2 | 13-10-1999 |
| | | | | JP | H11345347 | A | 14-12-1999 |
| | | | | US | 6271861 | B1 | 07-08-2001 |
| US | 5951713 | A | 14-09-1999 | JP | H08195891 | A | 30-07-1996 |
| | | | | US | 5951713 | A | 14-09-1999 |
| | | | | US | 6266044 | B1 | 24-07-2001 |
| US | 2003214506 | A1 | 20-11-2003 | US | 2003214506 | A1 | 20-11-2003 |
| | | | | US | 2005041039 | A1 | 24-02-2005 |
| US | 6388671 | B1 | 14-05-2002 | JP | 2889842 | B2 | 10-05-1999 |
| | | | | JP | H08212356 | A | 20-08-1996 |
| | | | | US | 6388671 | B1 | 14-05-2002 |
| GB | 2207585 | A | 01-02-1989 | CA | 1305802 | C | 28-07-1992 |
| | | | | DE | 3825539 | A1 | 09-02-1989 |
| | | | | FR | 2622030 | A1 | 21-04-1989 |
| | | | | GB | 2207585 | A | 01-02-1989 |
| | | | | HK | 60992 | A | 21-08-1992 |
| | | | | JP | 2777577 | B2 | 16-07-1998 |
| | | | | JP | H01120685 | A | 12-05-1989 |
| | | | | SG | 52792 | G | 04-12-1992 |

EPO FORM P0459

For more details about this annex : see Official Journal of the European Patent Office, No. 12/82

**EP 2 709 068 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010165058 A
- JP 2008148165 A